# EUROPÄISCHE PATENTANMELDUNG

(11) **EP 3 859 208 A1**
(43) Veröffentlichungstag der Anmeldung: **04.08.2021**
(21) Anmeldenummer: 21150006.1
(22) Anmeldetag: 04.01.2021
(51) Int. Cl.: F23K 5/14, B60H 1/22, F24H 3/06

(54) **FAHRZEUGHEIZGERÄT**

(30) Priorität: 28.01.2020 DE 102020101963
(71) Anmelder: Eberspächer Climate Control Systems GmbH, 73730 Esslingen (DE)
(72) Erfinder: Collmer, Andreas, 73773 Aichwald (DE)
(74) Vertreter: Ruttensperger Lachnit Trossin Gomoll

(57) **Zusammenfassung**

Ein Fahrzeugheizgerät, umfassend ein mit einer Umfangswandung (12) einen Verbrennungsluftströmungsraum (14) umgrenzendes Gehäuse (10), eine mit Brennstoff und Verbrennungsluft zu speisende Brennkammerbaugruppe (18), eine an die Brennkammerbaugruppe (18) anschließende Brennstoffzuführleitung (28) zum Zuführen von Brennstoff zu der Brennkammerbaugruppe (18), wobei in der Umfangswandung (12) eine Brennstoffzuführleitung-Durchtrittsöffnung (30) vorgesehen ist, wobei die Brennstoffzuführleitung (28) einen an die Brennkammerbaugruppe (18) anschließenden Brennkammerbaugruppe-Anschlussendbereich (54), einen außerhalb der Umfangswandung (12) liegenden Extern-Anschlussendbereich (58) und einen zwischen dem Brennkammerbaugruppe-Anschlussendbereich (54) und dem Extern-Anschlussendbereich (58) sich erstreckenden, die Brennstoffzuführleitung-Durchtrittsöffnung (30) durchsetzenden Leitungsbereich (56) umfasst, eine Dichtformation (32) mit einem ersten Dichtformationsbereich (34), wobei der erste Dichtformationsbereich (34) zum Herstellen eines im Wesentlichen fluiddichten Abschlusses zwischen der Umfangswandung (12) und dem Leitungsbereich (56) der Brennstoffzuführleitung (28) in die Brennstoffzuführleitung-Durchtrittsöffnung (30) eingreifend positioniert ist, wobei die Dichtformation (32) im ersten Dichtformationsbereich (34) eine von dem Leitungsbereich (56) der Brennstoffzuführleitung (28) durchsetzte Durchtrittsöffnung (52) aufweist, ist dadurch gekennzeichnet, dass die Brennstoffzuführleitung (28) in einem die Durchtrittsöffnung (52) im ersten Dichtformationsbereich (34) durchsetzenden Durchsatz-Längenbereich (60) eine größere Querschnittsabmessung aufweist, als in einem zwischen dem Durchsatz-Längenbereich (60) und dem Extern-Anschlussbereich (58) liegenden Abschnitt des Leitungsbereichs (56).

## Beschreibung

Die vorliegende Erfindung betrifft ein Fahrzeugheizgerät, umfassend ein mit einer Umfangswandung einen Verbrennungsluftströmungsraum umgrenzendes Gehäuse, eine mit Brennstoff und Verbrennungsluft zu speisende Brennkammerbaugruppe, eine an die Brennkammerbaugruppe anschließende Brennstoffzuführleitung zum Zuführen von Brennstoff zu der Brennkammerbaugruppe, wobei in der Umfangswandung eine Brennstoffzuführleitung-Durchtrittsöffnung vorgesehen ist, wobei die Brennstoffzuführleitung einen an die Brennkammerbaugruppe anschließenden Brennkammerbaugruppe-Anschlussendbereich, einen außerhalb der Umfangswandung liegenden Extern-Anschlussendbereich und einen zwischen dem Brennkammerbaugruppe-Anschlussendbereich und dem Extern-Anschlussendbereich sich erstreckenden, die Brennstoffzuführleitung-Durchtrittsöffnung durchsetzenden Leitungsbereich umfasst, sowie eine Dichtformation mit einem ersten Dichtformationsbereich, wobei der erste Dichtformationsbereich zum Herstellen eines im Wesentlichen fluiddichten Abschlusses zwischen der Umfangswandung und dem Leitungsbereich der Brennstoffzuführleitung in die Brennstoffzuführleitung-Durchtrittsöffnung eingreifend positioniert ist, wobei die Dichtformation im ersten Dichtformationsbereich eine von dem Leitungsbereich der Brennstoffzuführleitung durchsetzte Durchtrittsöffnung aufweist.

Ein derartiges Fahrzeugheizgerät ist aus der DE 10 2017 125 783 A1 bekannt. Die im Allgemeinen als Metallrohr bereitgestellte Brennstoffzuführleitung durchsetzt die Dichtformation im Bereich der im ersten Dichtformationsbereich vorgesehenen Durchtrittsöffnung. Die aus elastischen Material aufgebaute Dichtformation liegt unter Vorspannung an der Außenoberfläche der Brennstoffzuführleitung in ihrem die Durchtrittsöffnung durchsetzenden Durchsatz-Längenbereich an und stellt somit einen dichten Anschluss an die Brennstoffzuführleitung bereit.

Es ist die Aufgabe der vorliegenden Erfindung, ein gattungsgemäßes Fahrzeugheizgerät derart weiterzubilden, dass eine verbesserte Dichtigkeit im Bereich des ersten Dichtformationsbereichs erreicht wird.

Erfindungsgemäß wird diese Aufgabe gelöst durch ein Fahrzeugheizgerät, umfassend:
- ein mit einer Umfangswandung einen Verbrennungsluftströmungsraum umgrenzendes Gehäuse,
- eine mit Brennstoff und Verbrennungsluft zu speisende Brennkammerbaugruppe,
- eine an die Brennkammerbaugruppe anschließende Brennstoffzuführleitung zum Zuführen von Brennstoff zu der Brennkammerbaugruppe, wobei in der Umfangswandung eine Brennstoffzuführleitung-Durchtrittsöffnung vorgesehen ist, wobei die Brennstoffzuführleitung einen an die Brennkammerbaugruppe anschließenden Brennkammerbaugruppe-Anschlussendbereich, einen außerhalb der Umfangswandung liegenden Extern-Anschlussendbereich und einen zwischen dem Brennkammerbaugruppe-Anschlussendbereich und dem Extern-Anschlussendbereich sich erstreckenden, die Brennstoffzuführleitung-Durchtrittsöffnung durchsetzenden Leitungsbereich umfasst,
- eine Dichtformation mit einem ersten Dichtformationsbereich, wobei der erste Dichtformationsbereich zum Herstellen eines im Wesentlichen fluiddichten Abschlusses zwischen der Umfangswandung und dem Leitungsbereich der Brennstoffzuführleitung in die Brennstoffzuführleitung-Durchtrittsöffnung eingreifend positioniert ist, wobei die Dichtformation im ersten Dichtformationsbereich eine von dem Leitungsbereich der Brennstoffzuführleitung durchsetzte Durchtrittsöffnung aufweist.

Dieses Fahrzeugheizgerät zeichnet sich dadurch aus, dass die Brennstoffzuführleitung in einem die Durchtrittsöffnung im ersten Dichtformationsbereich durchsetzenden Durchsatz-Längenbereich eine größere Querschnittsabmessung aufweist, als in einem zwischen dem Durchsatz-Längenbereich und dem Extern-Anschlussbereich liegenden Abschnitt des Leitungsbereichs.

Um die Brennstoffzuführleitung in ihrem außerhalb der Umfangswandung liegenden Extern-Anschlussendbereich an eine beispielsweise schlauchartig ausgebildete Brennstoffleitung anschließen zu können, ist die Brennstoffzuführleitung in ihrem Extern-Anschlussendbereich im Allgemeinen mit größerer Querschnittsabmessung bereitgestellt, als in ihrem den Extern-Anschlussendbereich mit dem Brennkammerbaugruppe-Anschlussendbereich verbindenden, im Allgemeinen als Metallrohr ausgebildeten Leitungsbereich.

Beim Zusammenbau eines Fahrzeugheizgeräts wird daher die Brennstoffzuführleitung zunächst mit ihrem Extern-Anschlussendbereich mit größerer Querschnittsabmessung durch die Durchtrittsöffnung im ersten Dichtformationsbereich hindurchgeführt, bis der Leitungsbereich mit seinem die Durchtrittsöffnung durchsetzend zu positionierenden Durchsatz-Längenbereich in der Durchtrittsöffnung zu liegen kommt. Da bei dem erfindungsgemäß aufgebauten Fahrzeugheizgerät der Durchsatz-Längenbereich bezüglich des Leitungsbereichs der Brennstoffzuführleitung, der sich zwischen dem Extern-Anschlussendbereich und dem Brennkammerbaugruppe-Anschlussendbereich erstreckt, mit vergrößerter Querschnittsabmessung bereitgestellt ist, kann die Dichtformation in ihrem ersten Dichtformationsbereich mit einer Durchtrittsöffnung bereitgestellt werden, welche eine Grund-Öffnungsquerschnittsabmessung aufweist, die größer ist als die Querschnittsabmessung der Brennstoffzuführleitung im Leitungsbereich außerhalb des Durchsatz-Längenbereichs. Dies vermeidet eine übermäßige Dehnung des ersten Dichtformationsbereichs, wenn die Brennstoffzuführleitung mit ihrem Extern-Anschlussendbereich durch die Durchtrittsöffnung hindurchgeführt wird. Das Vermeiden einer übermäßigen Dehnung des ersten Dichtformationsbereichs stellt sicher, dass dieser dann, wenn die Brennstoffzuführleitung mit dem Durchsatz-Längenbereich in der Durchtrittsöffnung positioniert ist, die Dichtformation mit ihrem ersten Dichtformationsbereich unter ausreichend starker Vorspannung an der Außenoberfläche der Brennstoffzuführleitung im Bereich des Durchsatz-Längenbereichs anliegt und somit einen zuverlässigen dichten Abschluss erzeugt.

Es ist darauf hinzuweisen, dass im Sinne der vorliegenden Erfindung die Grund-Öffnungsquerschnittsabmessung der Durchtrittsöffnung diejenige Querschnittsabmessung ist, welche die Durchtrittsöffnung aufweist, bevor die Brennstoffzuführleitung durch diese hindurchgeführt wird und dabei der erste Dichtformationsbereich aufgeweitet wird.

Beispielsweise kann eine übermäßige Dehnung der Dichtungsformation beim Einführen der Brennstoffzuführleitung dadurch vermieden werden, dass die Grund-Öffnungsquerschnittsabmessung der Durchtrittsöffnung vor dem Einführen der Brennstoffzuführleitung derart, dass der Durchsatz-Längenbereich die Durchtrittsöffnung durchsetzend positioniert ist, im Bereich einer Querschnittsabmessung der Brennstoffzuführleitung im Bereich des Extern-Anschlussendbereichs liegt.

Als besonders vorteilhaft hat sich eine derartige Dimensionierung gezeigt, bei welcher die Grund-Öffnungsquerschnittsabmessung wenigstens 90 %, vorzugsweise wenigstens 100 %, der Querschnittsabmessung der Brennstoffzuführleitung im Bereich des Extern-Anschlussendbereichs beträgt.

Weiter kann eine übermäßige Dehnung der Dichtformationsbereich vermieden werden, wenn eine Querschnittsabmessung der Brennstoffzuführleitung im Durchsatz-Längenbereich im Bereich einer Querschnittsabmessung der Brennstoffzuführleitung im Bereich des Extern-Anschlussendbereichs liegt.

Auch hier kann beispielsweise vorgesehen sein, dass die Querschnittsabmessung der Brennstoffzuführleitung im Durchsatz-Längenbereich wenigstens 90 %, vorzugsweise wenigstens 100 %, der Querschnittsabmessung der Brennstoffzuführleitung im Bereich des Extern-Anschlussendbereichs beträgt.

Um sicherzustellen, dass im Zusammenbauzustand die Dichtformation unter Vorspannung an der Brennstoffzuführleitung anliegt, wird vorgeschlagen, dass die Grund-Öffnungsquerschnittsabmessung der Durchtrittsöffnung vor dem Einführen der Brennstoffzuführleitung derart, dass der Durchsatz-Längenbereich die Durchtrittsöffnung durchsetzend positioniert ist, kleiner ist, als eine Querschnittsabmessung der Brennstoffzuführleitung im Durchsatz-Längenbereich. Beispielsweise kann vorgesehen sein, dass die Querschnittsabmessung der Brennstoffzuführleitung im Durchsatz-Längenbereich wenigstens 105 %, vorzugsweise wenigstens 110 %, der Grund-Öffnungsquerschnittsabmessung beträgt.

Um die Brennstoffzuführleitung in ihrem Durchsatz-Längenbereich mit erweitertem Querschnitt bereitstellen zu können, kann der Leitungsbereich der Brennstoffzuführleitung im Durchsatz-Längenbereich von einer Querschnittserweiterungsanordnung umgeben sein.

Um dabei eine feste und dichte Verbindung zu erzeugen, wird vorgeschlagen, dass die Querschnittserweiterungsanordnung an dem Leitungsbereich durch Materialschluss oder/und Reibschluss festgelegt ist, oder dass die Querschnittserweiterungsanordnung an den Leitungsbereich angeformt ist.

Das erfindungsgemäße Fahrzeugheizgerät kann ferner derart aufgebaut sein, dass ein in Richtung einer Gehäuselängsachse an eine Stirnseite der Umfangswandung des Gehäuses anschließendes Verbrennungsluftgebläse zum Fördern von Verbrennungsluft in den Verbrennungsluftströmungsraum vorgesehen ist, und dass die Dichtformation einen zweiten Dichtformationsbereich aufweist, wobei der zweite Dichtformationsbereich zum Herstellen eines im Wesentlichen fluiddichten Abschlusses zwischen der Stirnseite der Umfangswandung und einem Gebläsegehäuse des Verbrennungsluftgebläses zwischen der Stirnseite der Umfangswandung und dem Gebläsegehäuse angeordnet ist.

Für einen vereinfachten und eine gute Dichtigkeit gewährleistenden Aufbau kann die Dichtformation ein den ersten Dichtformationsbereich und den zweiten Dichtformationsbereich bereitstellendes Dichtelement umfassen.

Der zweite Dichtformationsbereich ist vorzugsweise an eine Umfangskontur der Umfangswandung angepasst ringartig ausgebildet.

Für die Integration in die Umfangswandung wird vorgeschlagen, dass der erste Dichtformationsbereich vom zweiten Dichtformationsbereich sich im Wesentlichen in Richtung der Gehäuselängsachse abstehend und in die Brennstoffzuführleitung-Durchtrittsöffnung eingreifend erstreckt.

Die Dichtformation ist vorzugsweise aus Elastomermaterial, insbesondere aus brennstoffbeständigem Elastomermaterial, aufgebaut ist.

Bei dem erfindungsgemäßen Fahrzeugheizgerät kann das Gehäuse Teil eines Wärmetauschergehäuses sein, und die Brennkammerbaugruppe kann an einem Bodenbereich des Wärmetauschergehäuses getragen sein.

Die vorliegende Erfindung wird nachfolgend mit Bezug auf die beiliegenden Figuren detailliert beschrieben. Es zeigt:
- Fig. 1: eine perspektivische Ansicht eines Teils eines brennstoffbetriebenen Fahrzeugheizgeräts;
- Fig. 2: eine Axialansicht des in Fig. 1 dargestellten Teils eines Fahrzeugheizgeräts;

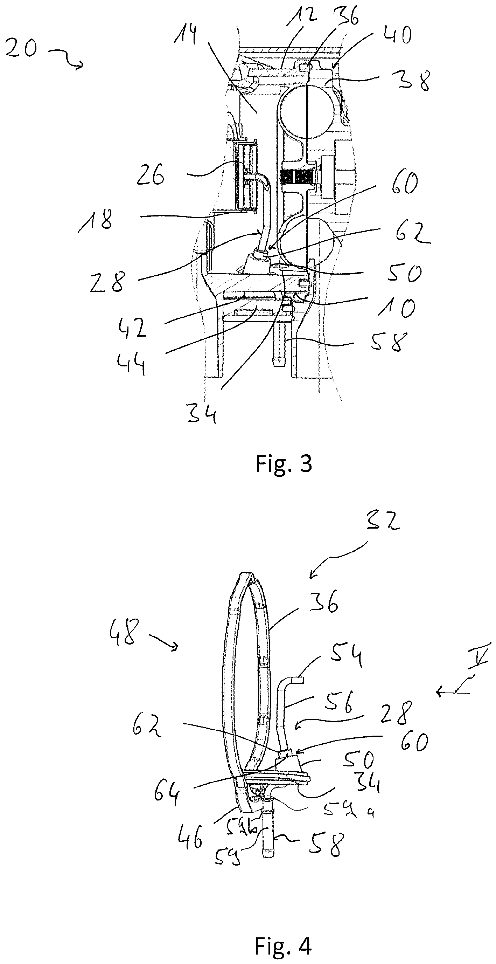

- Fig. 3: eine Teil-Längsschnittansicht des Fahrzeugheizgeräts;
- Fig. 4: eine Dichtformation in Verbindung mit einer Brennstoffzuführleitung;

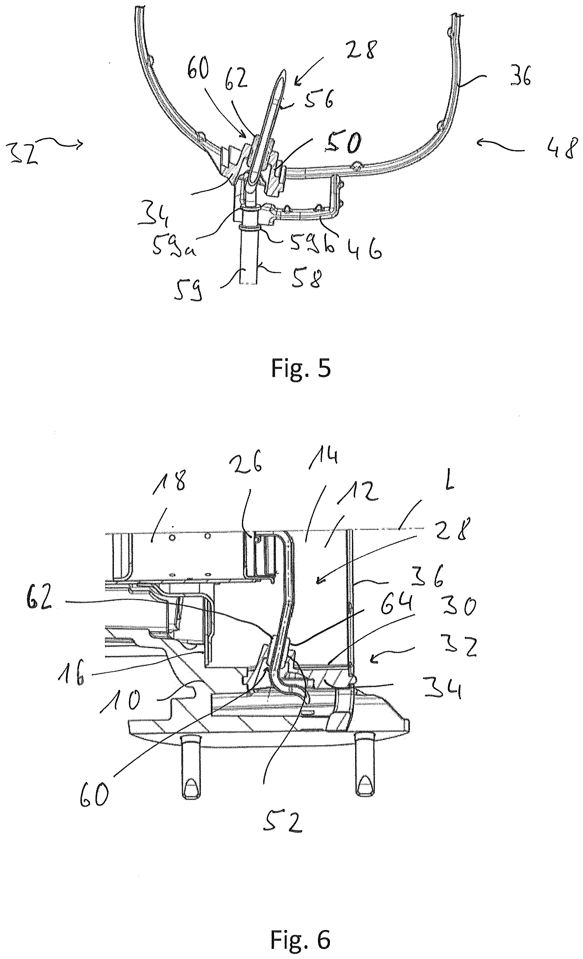

- Fig. 5: eine Teilansicht der Dichtformation der Fig. 4 in Blickrichtung V in Fig. 4;
- Fig. 6: eine vergrößerte Teil-Längsschnittdarstellung des in Fig. 1 dargestellten Teils eines Fahrzeugheizgeräts.

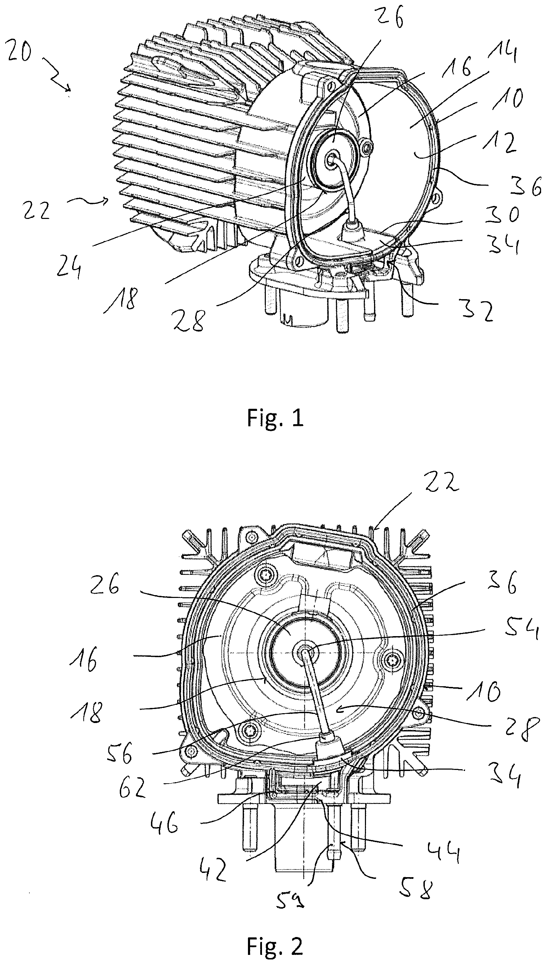

In Fig. 1 ist ein allgemein mit 10 bezeichnetes Gehäuse eines Fahrzeugheizgeräts dargestellt, welches mit einer Umfangswandung 12 einen Verbrennungsluftströmungsraum 14 umgrenzt. An die Umfangswandung 12 schließt ein Bodenbereich 16 an, welcher den Verbrennungsluftströmungsraum 14 in Richtung einer Gehäuselängsachse L begrenzt und an welchem eine allgemein mit 18 bezeichnete Brennkammerbaugruppe eines Fahrzeugheizgeräts 20 getragen ist.

Das Gehäuse 10 bildet im dargestellten Ausgestaltungsbeispiel einen integralen Bestandteil eines als Metallbauteil bereitgestellten Wärmetauschergehäuses 22 des Fahrzeugheizgeräts 20. An diesem Wärmetauschergehäuse 22 bzw. Gehäuse 10 ist die Brennkammerbaugruppe 18 mit herkömmlichem Aufbau vorgesehen. Hierzu weist die Brennkammerbaugruppe 18 ein Brennkammergehäuse mit einer Umfangswandung 24 und einer Bodenwandung 26 auf. In die Bodenwandung 26 mündet eine nachfolgend noch detaillierter erläuterte Brennstoffzuführleitung 28 ein, um neben der über den Verbrennungsluftströmungsraum 14 zugeführten Verbrennungsluft auch den für die Verbrennung erforderlichen Brennstoff in eine von der Umfangswandung 24 und der Bodenwandung 26 umgebene Brennkammer der Brennkammerbaugruppe 18 einzuleiten.

In der Umfangwandung 12 des Gehäuses 10 ist eine in Richtung vom Bodenbereich 16 weg axial offene Brennstoffzuführleitung-Durchtrittsöffnung 30 ausgebildet. Durch die Brennstoffzuführleitung-Durchtrittsöffnung 30 ist die Brennstoffzuführleitung 28 hindurch in den Verbrennungsluftströmungsraum 14 geführt. Vermittels einer allgemein mit 32 bezeichneten Dichtformation bzw. eines ersten Dichtformationsbereichs 34 derselben ist die Brennstoffzuführleitung-Durchtrittsöffnung 30 in der Umfangswandung 12 des Gehäuses 10 gegen den Austritt von Gas dicht abgeschlossen. Die Dichtformation 32 umfasst ferner einen an die ringartige Gestalt der Umfangswandung 12 angepasst ringförmig ausgebildeten zweiten Dichtformationsbereich 36 auf. Dieser ist zwischen einer Stirnseite der Umfangswandung 12 und einem dieser gegenüberliegenden Gebläsegehäuse 38 eines allgemein mit 40 bezeichneten Verbrennungsluftgebläses, beispielsweise Seitenkanalgebläse, positioniert. Somit wird auch im Anschluss des Gehäuses 10 an das Verbrennungsluftgebläse 40 ein gegen den Austritt von Gas dichter Abschluss erreicht.

In demjenigen Umfangsbereich der Umfangswandung 12 des Gehäuses 10, in welchem in der Umfangswandung 12 die Brennstoffzuführleitung-Durchtrittsöffnung 30 gebildet ist, ist an der Außenseite der Umfangswandung 12 eine allgemein mit 42 bezeichnete Pufferkammer vorgesehen. Diese ist von einer mit der Umfangswandung 12 beispielsweise integral ausgebildeten weiteren Umfangswandung 44 umgeben und weist gleichermaßen eine axial offene Öffnung auf, durch welche die Brennstoffzuführleitung 28 hindurchgeführt ist. Die Dichtformation weist in ihrem zweiten Dichtformationsbereich 36 einen an einer Stirnseite der weiteren Umfangswandung 44 anliegenden bzw. im Anschluss der weiteren Umfangswandung 44 an das Gebläsegehäuse 38 einen dichten Abschluss erzeugenden Abschnitt 46 auf.

Die Dichtformation 32 ist mit ihrem zweiten Dichtformationsbereich 36, dessen Abschnitt 46 und dem vom zweiten Dichtformationsbereich 36 in Richtung der Gehäuselängsachse L sich abstehend erstreckenden ersten Dichtformationsbereich 34 als ein integrales Dichtelement 48 aus Elastomermaterial, insbesondere brennstoffresistentem Elastomermaterial, aufgebaut. Zum Hindurchführen der Brennstoffzuführleitung 28 durch den ersten Dichtformationsbereich 34 der Dichtformation 32 bzw. des Dichtelements 48 ist am ersten Dichtformationsbereich 34 ein sich in den Verbrennungsluftströmungsraum 14 hinein erstreckender Ansatz 50 vorgesehen, der eine Durchtrittsöffnung 52 für die Brennstoffzuführleitung 28 bereitstellt.

Die Brennstoffzuführleitung 28 weist einen an die Brennkammerbaugruppe 18, insbesondere die Bodenwandung 26 derselben beispielsweise durch Verschweißen oder Verlöten dicht angeschlossenen Brennkammerbaugruppe-Anschlussendbereich 54 auf. Dieser Brennkammerbaugruppe-Anschlussendbereich 54 kann ein Endbereich eines auch durch die Durchtrittsöffnung 52 sich hindurch erstreckenden und im Allgemeinen als Metallrohr bereitgestellten Leitungsbereichs 56 der Brennstoffzuführleitung 28 sein. Zum Anschluss an eine außerhalb des Gehäuses 10 bzw. der Umfangswandung 12 sich erstreckende, beispielsweise schlauchartige Brennstoffleitung, welche zu einem Brennstofftank führt, weist die Brennstoffzuführleitung 28 ferner einen Extern-Anschlussendbereich 58 auf. Dieser kann durch einen rohrartigen oder hülsenartigen Stutzen 59 bereitgestellt sein, der an dem den Leitungsbereich 56 bereitstellenden Rohr, insbesondere Metallrohr, festgelegt ist und im Allgemeinen eine größere Querschnittsabmessung, also Außenabmessung, aufweist, als der Leitungsbereich 56 bzw. das den Leitungsbereich 56 bereitstellende Metallrohr. Insbesondere ist im Allgemeinen vorgesehen, dass der Extern-Anschlussendbereich 58 der Brennstoffzuführleitung 28 denjenigen Längenbereich der Brennstoffzuführleitung 28 bereitstellt, in welchem diese die größte Querschnittsabmessung aufweist. An dem den Extern-Anschlussendbereich 58 bereitstellenden Stutzen sind in Abstand zueinander zwei nach radial außen vorstehende, beispielsweise ringartige Wulste oder Flanschbereiche 59a, 59b vorgesehen. Beispielsweise in Zusammenwirkung mit dem dazwischen aufgenommenen Abschnitt 46 des zweiten Dichtformationsbereich 36 stellen diese eine Zug/Druck-Entlastung für die Brennstoffzuführleitung 28 bereit. Im dargestellten Ausgestaltungsbeispiel bilden diese Wulste oder Flanschbereiche 59a, 59b den Bereich maximaler Querschnittsabmessung, also beispielsweise maximalen Außendurchmessers bei kreisartiger Ausgestaltung, des Extern-Anschlussendbereichs 58.

In einem im Zusammenbauzustand die Durchtrittsöffnung 52 des ersten Dichtformationsbereichs 34 durchsetzend positionierten Durchsatz-Längenbereich 60 des Leitungsbereichs 56 ist eine allgemein mit 62 bezeichnete Querschnittserweiterungsanordnung der Brennstoffzuführleitung 28 am Leitungsbereich 56 vorgesehen. Die Querschnittserweiterungsanordnung kann beispielsweise durch eine auf den Leitungsbereich 56 aufgeschobene und daran durch Presspassung, also Reibschluss, oder/und durch Materialschluss, wie z. B. Verschweißen oder Verlöten, festgelegte Hülse 64 bereitgestellt sein. Bei einer alternativen Ausgestaltung kann die Hülse 64 bzw. der Querschnittserweiterungsbereich 62 durch Anformen an dem Leitungsbereich 56 der Brennstoffzuführleitung 28 vorgesehen bzw. festgelegt werden. Vorzugsweise findet der Vorgang des Festlegens der Querschnittserweiterungsanordnung 62 statt, bevor die Brennstoffzuführleitung 28 bzw. der Leitungsbereich 56 in die in den Figuren erkennbare Form gebogen wird und mit seinem Brennkammerbaugruppe-Anschlussendbereich 54 an die Brennkammerbaugruppe 18 bzw. die Bodenwandung 26 derselben angebunden wird bzw. der den Extern-Anschlussendbereich 58 bereitstellende Ansatz 59 an dem Leitungsbereich 56 beispielsweise ebenfalls durch Materialschluss oder/und Aufpressen festgelegt wird. Alternativ kann insbesondere dann, wenn die Querschnittserweiterungsanordnung durch Anformen am Leitungsbereich 56 vorgesehen werden soll, dieser Vorgang erfolgen, nachdem der Leitungsbereich 56 in die für den Einbau vorgesehene Form gebracht worden ist oder/und am Bodenbereich 26 der Brennkammerbaugruppe 18 bzw. am Extern-Anschlussendbereich 58 festgelegt worden ist.

Durch das Vorsehen der Querschnittserweiterungsanordnung 62 am Leitungsbereich 56 der Brennstoffzuführleitung 28 wird dafür gesorgt, dass diese in ihrem Durchsatz-Längenbereich 60 eine größere Querschnittsabmessung aufweist, als in ihren stromaufwärts und stromabwärts davon liegenden Abschnitten des Leitungsbereichs 56. Beispielsweise kann vorgesehen sein, dass im Durchsatz-Längenbereich 60 die Brennstoffzuführleitung 28 eine Querschnittsabmessung, also beispielsweise einen Außendurchmesser bei zum Beispiel näherungsweise kreisartiger Umfangskontur, aufweist, die im Bereich der Querschnittsabmessung bzw. der maximalen Querschnittsabmessung der Brennstoffzuführleitung 28 im Bereich des Extern-Anschlussbereichs 58 und somit auch im Bereich der maximalen Querschnittsabmessung der Brennstoffzuführleitung 28 an sich liegt. Vorzugsweise kann vorgesehen sein, dass die Querschnittsabmessung im Durchsatz-Längenbereich 60 wenigstens 90 % der Querschnittsabmessung im Extern-Anschlussbereich 58 beträgt oder genauso groß oder größer ist, als die Querschnittsabmessung bzw. die maximale Querschnittsabmessung im Extern-Anschlussbereich 58. Der erste Dichtformationsbereich 34 ist dann mit seiner Durchtrittsöffnung 52 bzw. der Querschnittsabmessung, also dem Innendurchmesser der beispielsweise kreisartigen Durchtrittsöffnung 52, auf die Querschnittsabmessung des Durchsatz-Längenbereichs 60 derart abgestimmt, dass bei die Durchtrittsöffnung 52 durchsetzendem Durchsatz-Längenbereich 60 die Dichtformation 32 bzw. das Dichtelement 48 mit dem die Durchtrittsöffnung 52 umgebenden Materialbereich unter Vorspannung an der Außenumfangsfläche der Brennstoffzuführleitung 28 im Bereich des Durchsatz-Längenbereichs 60 anliegt und dadurch einen dichten Abschluss erzeugt. Dies bedeutet, dass die Durchtrittsöffnung 52 so dimensioniert sein kann, dass ihre Querschnittsabmessung, also ihr Innendurchmesser, größer ist, als die Querschnittsabmessung des Leitungsbereichs 56 der Brennstoffzuführleitung 28 außerhalb des Durchsatz-Längenbereichs 60, so dass ohne die Querschnittserweiterungsanordnung 62 im Durchsatz-Längenbereich 60 ein dichter Abschluss nicht erzeugt werden könnte. Beispielsweise kann die Querschnittsabmessung des Leitungsbereichs 56 im Durchsatz-Längenbereich 60 wenigstens 105 % der Grund-Öffnungsquerschnittsabmessung der Durchtrittsöffnung 52 betragen.

Eine derartige Dimensionierung der Durchtrittsöffnung 52 gestattet es, beim Zusammenbau des Fahrzeugheizgeräts 20 die Brennstoffzuführleitung mit ihrem Extern-Anschlussbereich 58 durch die Durchtrittsöffnung 52 hindurch zu führen, ohne dass dabei die Dichtformation 32 in ihrem ersten Dichtformationsbereich 34 übermäßig gedehnt werden muss. Insbesondere dann, wenn die Querschnittsabmessung der Brennstoffzuführleitung 28 im Durchsatz-Längenbereich 60 so gewählt ist, dass diese näherungsweise gleich oder größer ist, als die Querschnittsabmessung bzw. die maximale Querschnittabmessung im Extern-Anschlussbereich 58, also dem außerhalb der Umfangswandung 12 des Gehäuses 10 zu positionierenden Abschnitt der Brennstoffzuführleitung 28, kann die Durchtrittsöffnung 52 so dimensioniert werden, dass deren Querschnittsabmessung, also zum Beispiel Innendurchmesser, wenigstens 90 % der Querschnittsabmessung bzw. der maximalen Querschnittsabmessung der Brennstoffzuführleitung 28 im Extern-Anschlussbereich 58 beträgt oder genauso groß oder größer ist, als die maximale Querschnittsabmessung der Brennstoffzuführleitung 28 im Extern-Anschlussbereich 58. Auf diese Art und Weise kann eine Dehnung der Dichtformation 32 beim Hindurchführen der Brennstoffzuführleitung 28 durch die Durchtrittsöffnung 52 bis zu einer Phase, in welcher der Durchsatz-Längenbereich 60 in die Durchtrittsöffnung 52 eingeführt wird, vollständig vermieden werden. Da grundsätzlich aber die Durchtrittsöffnung 52 eine kleinere Querschnittsabmessung aufweist, als der Durchsatz-Längenbereich 60 der Brennstoffzuführleitung 28 ist gleichwohl gewährleistet, dass der erste Dichtformationsbereich 34 im Zusammenbauzustand durch die inhärente Elastizität der Dichtformation 32 unter Vorspannung an der Außenumfangsfläche des Durchsatz-Längenbereichs 60 bzw. der Querschnittserweiterungsanordnung 62 anliegt und somit den dichten Abschluss erzeugt. Dies ist besonders daher von Relevanz, da die zum Aufbau der Dichtformation 32 eingesetzten, brennstoffresistenten Elastomermaterialien nur in einem begrenzten Bereich elastisch gedehnt werden können, ohne dass eine Schädigung der Materialstruktur bzw. ein Verlust der zu einem dichten Anschluss führenden bzw. erforderlichen elastischen Eigenschaft erzeugt wird.

Um beim Einführen der Brennstoffzuführleitung 28 in die Durchtrittsöffnung 52 dann, wenn die Querschnittserweiterungsanordnung 62 in die Durchtrittsöffnung 52 eingeschoben wird, eine Beschädigung des ersten Dichtformationsbereichs 34 zu vermeiden, weist vorzugsweise die Querschnittserweiterungsanordnung 62 zumindest an ihrem dem Extern-Anschlussbereich 58 zugewandten Ende eine Anfasung auf.

Ein weiterer Vorteil der erfindungsgemäßen Ausgestaltung liegt darin, dass für den Aufbau verschiedener Heizgeräte, welche verschieden dimensionierte Brennstoffzuführleitungen bzw. Leitungsbereiche verwenden, Dichtformationen mit gleichem Aufbau verwendet werden können und lediglich eine Anpassung im Bereich der Querschnittserweiterungsanordnung an verschiedene Außenabmessungen des Leitungsbereichs der Brennstoffzuführleitung erforderlich ist. Somit können Dichtungsformationen gleicher Bauart sowohl für Diesel-Heizgeräte, als auch für Benzin-Heizgeräte verwendet werden, die im Allgemeinen Brennstoffzuführleitungen unterschiedlicher Querschnittsabmessung aufweisen.

Ein weiterer Vorteil liegt darin, dass die erfindungsgemäße Ausgestaltung bzw. Dimensionierung des ersten Dichtformationsbereichs 34 einen besseren Ausgleich von Formtoleranzen ermöglicht und aufgrund des Umstandes, dass die Querschnittserweiterungsanordnung 62 entlang des Leitungsbereichs 56 eine Erstreckungslänge aufweist, die deutlich größer ist, als die Materialstärke des ersten Dichtformationsbereichs 34 in demjenigen Bereich, in welchem die Durchtrittsöffnung 52 vorgesehen ist, Positionsungenauigkeiten, welche beim Zusammenbau der Brennstoffzuführleitung 28 mit der Brennkammerbaugruppe 18 im Allgemeinen unvermeidbar sind, keine Auswirkung auf die Zusammenwirkung der Brennstoffzuführleitung 28 mit dem ersten Dichtformationsbereich 34 zum Bereitstellen des dichten Abschlusses haben.

Mit dem erfindungsgemäßen Aufbau eines Fahrzeugheizgeräts kann gewährleistet werden, dass aus dem Verbrennungsluftströmungsraum, in welchen in einer Stillstandphase des Fahrzeugheizgeräts Brennstoff bzw. Brennstoffdämpfe eintreten können, das Entweichen von Brennstoff bzw. Brennstoffdämpfen im Bereich der Dichtformation 32 nicht auftritt, und dass im Verbrennungsbetrieb, also dann, wenn das Verbrennungsluftgebläse Verbrennungsluft durch den Verbrennungsluftströmungsraum hindurch zur Brennkammerbaugruppe fördert, eine die Fördereffizienz beeinträchtigende Leckage im Bereich der Dichtformation nicht auftritt.

## Patentansprüche

1. Fahrzeugheizgerät, umfassend:
- ein mit einer Umfangswandung (12) einen Verbrennungsluftströmungsraum (14) umgrenzendes Gehäuse (10),
- eine mit Brennstoff und Verbrennungsluft zu speisende Brennkammerbaugruppe (18),
- eine an die Brennkammerbaugruppe (18) anschließende Brennstoffzuführleitung (28) zum Zuführen von Brennstoff zu der Brennkammerbaugruppe (18), wobei in der Umfangswandung (12) eine Brennstoffzuführleitung-Durchtrittsöffnung (30) vorgesehen ist, wobei die Brennstoffzuführleitung (28) einen an die Brennkammerbaugruppe (18) anschließenden Brennkammerbaugruppe-Anschlussendbereich (54), einen außerhalb der Umfangswandung (12) liegenden Extern-Anschlussendbereich (58) und einen zwischen dem Brennkammerbaugruppe-Anschlussendbereich (54) und dem Extern-Anschlussendbereich (58) sich erstreckenden, die Brennstoffzuführleitung-Durchtrittsöffnung (30) durchsetzenden Leitungsbereich (56) umfasst,
- eine Dichtformation (32) mit einem ersten Dichtformationsbereich (34), wobei der erste Dichtformationsbereich (34) zum Herstellen eines im Wesentlichen fluiddichten Abschlusses zwischen der Umfangswandung (12) und dem Leitungsbereich (56) der Brennstoffzuführleitung (28) in die Brennstoffzuführleitung-Durchtrittsöffnung (30) eingreifend positioniert ist, wobei die Dichtformation (32) im ersten Dichtformationsbereich (34) eine von dem Leitungsbereich (56) der Brennstoffzuführleitung (28) durchsetzte Durchtrittsöffnung (52) aufweist,
**dadurch gekennzeichnet, dass** die Brennstoffzuführleitung (28) in einem die Durchtrittsöffnung (52) im ersten Dichtformationsbereich (34) durchsetzenden Durchsatz-Längenbereich (60) eine größere Querschnittsabmessung aufweist, als in einem zwischen dem Durchsatz-Längenbereich (60) und dem Extern-Anschlussbereich (58) liegenden Abschnitt des Leitungsbereichs (56).

2. Fahrzeugheizgerät nach Anspruch 1, **dadurch gekennzeichnet, dass** eine Grund-Öffnungsquerschnittsabmessung der Durchtrittsöffnung (52) vor dem Einführen der Brennstoffzuführleitung (28) derart, dass der Durchsatz-Längenbereich (60) die Durchtrittsöffnung (52) durchsetzend positioniert ist, im Bereich einer Querschnittsabmessung der Brennstoffzuführleitung (28) im Bereich des Extern-Anschlussendbereichs (58) liegt.

3. Fahrzeugheizgerät nach Anspruch 2, **dadurch gekennzeichnet, dass** die Grund-Öffnungsquerschnittsabmessung wenigstens 90 %, vorzugsweise wenigstens 100 %, der Querschnittsabmessung der Brennstoffzuführleitung (28) im Bereich des Extern-Anschlussendbereichs (58) beträgt.

4. Fahrzeugheizgerät nach einem der vorangehenden Ansprüche, **dadurch gekennzeichnet, dass** eine Querschnittsabmessung der Brennstoffzuführleitung (28) im Durchsatz-Längenbereich (60) im Bereich einer Querschnittsabmessung der Brennstoffzuführleitung (28) im Bereich des Extern-Anschlussendbereichs (58) liegt.

5. Fahrzeugheizgerät nach Anspruch 4, **dadurch gekennzeichnet, dass** die Querschnittsabmessung der Brennstoffzuführleitung (28) im Durchsatz-Längenbereich (60) wenigstens 90 %, vorzugsweise wenigstens 100 %, der Querschnittsabmessung der Brennstoffzuführleitung (28) im Bereich des Extern-Anschlussendbereichs (58) beträgt.

6. Fahrzeugheizgerät nach einem der vorangehenden Ansprüche, **dadurch gekennzeichnet, dass** eine Grund-Öffnungsquerschnittsabmessung der Durchtrittsöffnung (52) vor dem Einführen der Brennstoffzuführleitung (28) derart, dass der Durchsatz-Längenbereich (60) die Durchtrittsöffnung (52) durchsetzend positioniert ist, kleiner ist, als eine Querschnittsabmessung der Brennstoffzuführleitung (28) im Durchsatz-Längenbereich (60).

7. Fahrzeugheizgerät nach Anspruch 6, **dadurch gekennzeichnet, dass** die Querschnittsabmessung der Brennstoffzuführleitung (28) im Durchsatz-Längenbereich (60) wenigstens 105 %, vorzugsweise wenigstens 110 %, der Grund-Öffnungsquerschnittsabmessung beträgt.

8. Fahrzeugheizgerät nach einem der vorangehenden Ansprüche, **dadurch gekennzeichnet, dass** der Leitungsbereich (56) der Brennstoffzuführleitung (28) im Durchsatz-Längenbereich (60) von einer Querschnittserweiterungsanordnung (62) umgeben ist.

9. Fahrzeugheizgerät nach einem der vorangehenden Ansprüche, **dadurch gekennzeichnet, dass** die Querschnittserweiterungsanordnung (62) an dem Leitungsbereich (56) durch Materialschluss oder/und Reibschluss festgelegt ist, oder dass die Querschnittserweiterungsanordnung (62) an dem Leitungsbereich (56) durch Anformen festgelegt ist.

10. Fahrzeugheizgerät nach einem der vorangehenden Ansprüche, **dadurch gekennzeichnet, dass** ein in Richtung einer Gehäuselängsachse (L) an eine Stirnseite der Umfangswandung (12) des Gehäuses (10) anschließendes Verbrennungsluftgebläse (40) zum Fördern von Verbrennungsluft in den Verbrennungsluftströmungsraum (14) vorgesehen ist, und dass die Dichtformation (32) einen zweiten Dichtformationsbereich (36) aufweist, wobei der zweite Dichtformationsbereich (36) zum Herstellen eines im Wesentlichen fluiddichten Abschlusses zwischen der Stirnseite der Umfangswandung (12) und einem Gebläsegehäuse (38) des Verbrennungsluftgebläses (40) zwischen der Stirnseite der Umfangswandung (12) und dem Gebläsegehäuse (38) angeordnet ist.

11. Fahrzeugheizgerät nach Anspruch 10, **dadurch gekennzeichnet, dass** die Dichtformation (32) ein den ersten Dichtformationsbereich (34) und den zweiten Dichtformationsbereich (36) bereitstellendes Dichtelement (48) umfasst, oder/und dass der zweite Dichtformationsbereich (36) an eine Umfangskontur der Umfangswandung (12) angepasst ringartig ausgebildet ist.

12. Fahrzeugheizgerät nach Anspruch 10 oder 11, **dadurch gekennzeichnet, dass** der erste Dichtformationsbereich (34) vom zweiten Dichtformationsbereich (36) sich im Wesentlichen in Richtung der Gehäuselängsachse (L) abstehend und in die Brennstoffzuführleitung-Durchtrittsöffnung (30) eingreifend erstreckt.

13. Fahrzeugheizgerät nach einem der vorangehenden Ansprüche, **dadurch gekennzeichnet, dass** die Dichtformation (32) aus Elastomermaterial aufgebaut ist.

14. Fahrzeugheizgerät nach einem der vorangehenden Ansprüche, **dadurch gekennzeichnet, dass** das Gehäuse (10) Teil eines Wärmetauschergehäuses (22) ist, und dass die Brennkammerbaugruppe (18) an einem Bodenbereich (16) des Wärmetauschergehäuses (22) getragen ist.
